# EUROPEAN PATENT APPLICATION

(11) **EP 3 372 296 A1**
(43) Date of publication of application: **12.09.2018**
(21) Application number: 17159508.5
(22) Date of filing: 07.03.2017
(51) Int. Cl.: B01D 46/02, B01D 46/00

(54) **FILTER ELEMENT AND AIR FILTER WITH A REPLACEABLE FILTER MEDIUM AND METHOD FOR REPLACING A FILTER MEDIUM OF THE FILTER ELEMENT**

(71) Applicant: Mann+Hummel GmbH, 71638 Ludwigsburg (DE)
(72) Inventor: Moinuddin Sha, Mohamed Ghouse, 572104 Tumkur (IN)
(74) Representative: Seyboth, Matthias

(57) **Abstract**

The invention relates to a filter element (22) for an air filter. The filter element (22) has a support tube (24) to which a filter medium (26) is fixed by at least one retaining ring (32, 34), preferably two retaining rings (32, 34) at the axial end sections (28, 30) of the filter element (22). The filter element (22) can be built as a safety filter element for the air filter. The at least one retaining ring (32, 34), preferably both retaining rings (32, 34), is/are fixed directly or indirectly to the support tube (24) in order to attach the filter medium (26) to the support tube (24). The filter medium (26) is preferably attached in a radial direction to the support tube (24) by the retaining ring(s) (32, 34). Alternatively or in addition thereto, the filter medium (26) may be attached in an axial direction on the support tube (24) by the retaining ring(s) (32, 34). The filter element (22) may comprise at least one combination of a groove (42a-42c) and a corresponding key (44a-44c) for grabbing the filter medium (26). The retaining ring(s) (32, 34) may be built in a single-piece or in several retaining ring parts. If built in several retaining ring parts, the retaining ring(s) (32, 34) can preferably be closed by a snap connection.

## Description

### Technical Field

The present invention relates to an air filter with a filter element. The invention further relates to the filter element of the air filter. Furthermore, the invention relates to a method for assembling a filter medium on a support tube of the filter element and to a method for disassembling the filter medium from the support tube of the filter element.

### Background

DE 197 27 369 A1 discloses a filter element with a support tube. The support tube is covered with a filter medium. The filter medium is stretched on the support tube by a support ring.

EP 0 300 182 A1 discloses a filter element with a support tube and a filter medium. End caps are attached to the axial ends of the support tube. The end caps may consist of several assembled parts.

DE 38 14 983 C1 discloses a filter with a support basket. The filter comprises a filter hose which is attached to an opening of a filter housing via a bead of the filter hose.

WO 2009/041889 A1 discloses a filter device for separating stone-like dust from a stream of air. The filter device comprises a tubular body which is open at its ends. A circumferential seal of the filter device is arranged at an edge of at least one of the ends. The seal is outwardly foldable.

US 2010/0146917 A1 discloses an air cleaner assembly with a main filter element and a safety filter element. The safety filter element comprises a support tube and a filter medium. The support tube has a collar. The filter medium is attached in an axial direction to this collar via seal members.

The disclosed filter elements have the disadvantage that the filter media are either relatively hard to replace or that the filter elements have to be produced in a complex way.

### Disclosure of the Invention

It is therefore the object of the present invention to provide a filter element, a method for assembling and disassembling such a filter element, and a filter, wherein a filter medium of the filter element can be easily replaced and the filter element can be produced in an economic way.

This object is solved by the filter element according to claim 1, the air filter according to claim 8 and the method according to claim 10. The subjects according to the dependent claims are preferred examples.

The aforementioned object is thus solved by a filter element for an air filter, wherein the filter element comprises a support tube, a filter medium that radially covers the support tube at least partially, especially on the outside of the support tube, and a first retaining ring that presses the filter medium on the support tube in a first axial end section of the filter element, wherein the first retaining ring is installed via a snap connection.

The first retaining ring is snapped in order to attach the filter medium to the support tube. The first retaining ring may be coupled with the filter medium and/or the support tube via a snap connection. The first retaining ring may comprise a hook for indirect or direct connection of the first retaining ring to the support tube. The first retaining ring allows for easy assembly and disassembly of the filter medium. Thus, the support tube can be reused and only the filter medium needs to be exchanged.

The support tube preferably comprises a lattice-like part for radial passage of air. The lattice-like part, especially the outer side of the lattice-like part, is preferably completely covered by the filter medium. The filter preferably consists of a filter fleece.

The second retaining ring may be snapped in order to attach the filter medium to the support tube. The filter element may comprise a second retaining ring that presses the filter medium on the support tube in a second axial end section of the filter element, which second axial end section of the filter element is opposite the first axial end section of the filter element, wherein the second retaining ring is installed via a snap connection.

The second retaining ring may be coupled with the filter medium and/or the support tube via a snap connection. The second retaining ring may comprise a hook for indirect or direct connection of the second retaining ring to the support tube. The second retaining ring enables a secure fit of the filter medium on the support tube.

The first retaining ring may press the filter medium axially and/or radially on the support tube. Furthermore, the second retaining ring may press the filter medium axially and/or radially on the support tube.

The filter medium may be fixed firmly to the support tube by a connection of a groove with a corresponding key at the first retaining ring and/or the second retaining ring. Preferably, the support tube has in the first axial end section of the filter element a radial groove and the first retaining ring has a corresponding radial key, wherein the filter medium is held between groove and key in order to fix the filter medium to the support tube with respect to axial tension on the filter medium. Furthermore, the support tube may have in the second axial end section of the filter element a radial groove and the second retaining ring has a corresponding radial key, wherein the filter medium is held between groove and key in order to fix the filter medium to the support tube with respect to axial tension on the filter medium.

The filter medium may be folded in the first axial end section of the filter element. Alternatively or in addition thereto, the filter medium may be folded in the second axial end section of the filter element.

One or both retaining rings may be built in a single piece. In an advantageous embodiment, the first retaining ring is built of at least two retaining ring parts, which have a snap connection for joining respective ends of at least two retaining ring parts. Furthermore, the second retaining ring may be built of at least two retaining ring parts, which have a snap connection for joining respective ends of at least two retaining ring parts.

Preferably, the first retaining ring and/or the second retaining ring is/are built to be mounted and demounted in a non-destructive, in particular a toolless, manner.

The object is further solved by an air filter, wherein the air filter comprises an aforementioned filter element and a filter housing for an at least partial reception of this filter element.

The air filter preferably comprises a main filter element. In this case, the aforementioned filter element is preferably built in form of a safety filter element. The safety filter element may be built to be mounted and demounted in a non-destructive, in particular toolless, manner to/from the main filter element.

The object is further solved by a method for assembling an aforementioned filter element, wherein the method comprises the steps of providing the support tube, covering the support tube radially at least partially with the filter medium and securing the filter medium by snap fitting the first retaining ring. The first retaining ring may be snap fitted on the filter medium and/or the support tube in the first axial end section of the filter element.

The method may further comprise the step of securing the filter medium by snap fitting the second retaining ring. The second retaining ring may be snap fitted on the filter medium and/or the support tube in the second axial end section of the filter element.

The object is further solved by a method for disassembling the aforementioned filter element, wherein the first retaining ring and/or the second retaining ring is/are demounted in a non-destructive, in particular a toolless, manner.

### Brief Description of Drawings

Other advantages and features of the invention will be appreciated from the following description of embodiments of the invention with reference to the figures of the drawings, which show significant details and from the claims. The individual features may each be carried out individually or carried out together in any combination in variants of the invention.
- Figure 1: shows an air filter in a longitudinal cross section, wherein the air filter comprises a main filter element and a safety filter element;
- Figure 2a: shows a longitudinal cross section of a safety filter element in a partly exploded view;
- Figure 2b: shows a longitudinal cross section of the safety filter element according to figure 2a;
- Figure 2c: shows an enlarged view of detail C of figure 2b;
- Figure 2d: shows an enlarged view of detail D of figure 2b;
- Figure 2e: shows an isometric view of retaining rings according to figures 2a-2d in an open condition;
- Figure 2f: shows an isometric view of the retaining rings according to figure 2e in a closed condition;
- Figure 3: shows a schematic top view of a retaining ring;
- Figure 4a: shows a cross section of a safety filter element in a partly exploded view;
- Figure 4b: shows a longitudinal cross section of the safety filter element according to figure 4a;
- Figure 4c: shows an enlarged view of detail C of figure 4b;
- Figure 4d: shows an enlarged view of detail D of figure 4b.

### Detailed Description

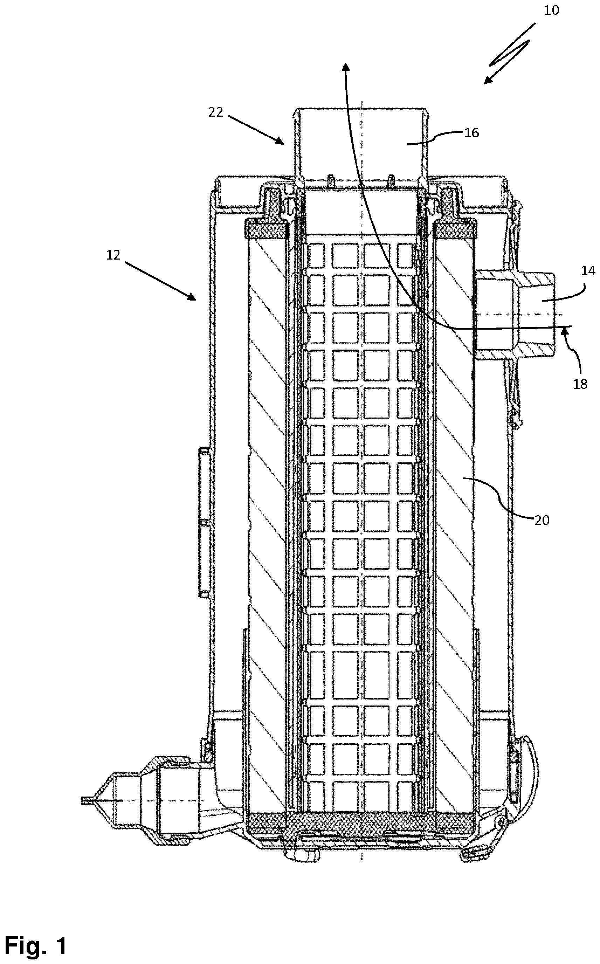

Figure 1 shows an air filter 10. The air filter 10 comprises a filter housing 12, an inlet 14 and an outlet 16. An arrow 18 shows a possible flow of air through the air filter 10. Air flowing through the air filter 10 is mainly filterd by a main filter element 20. If the main filter element 20 is defect or removed, the air flow will still be filtered by a safety filter element 22. The safety filter element 22 is typically built to filter coarser particles than the main filter element 20. The safety filter element 22 can be assembled and removed independently of the main filter element 20.

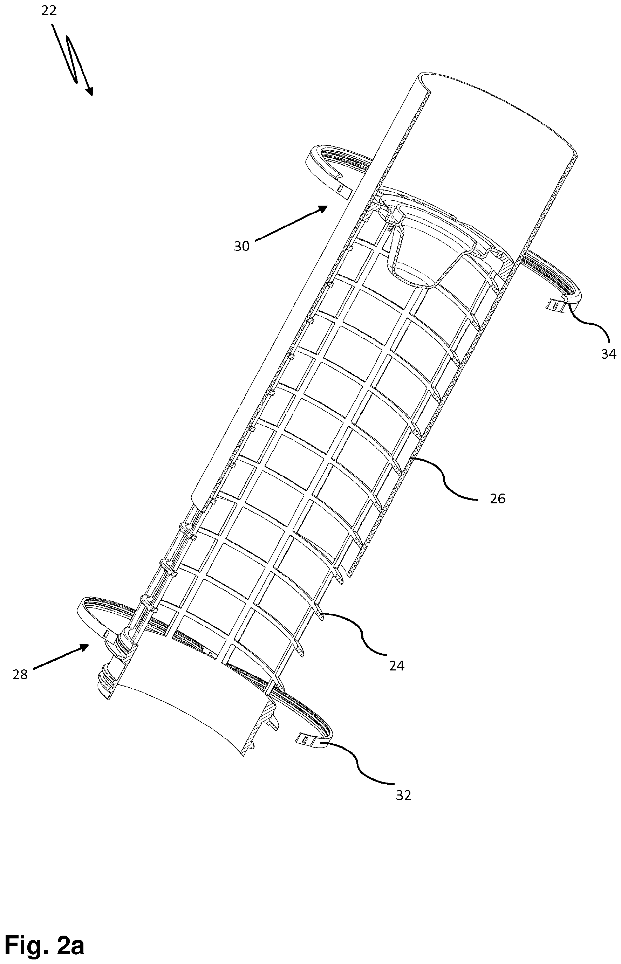

Figure 2a shows a safety filter element 22 comprising a support tube 24 and a filter medium 26 that covers a grid-like part of the support tube 24. With respect to its longitudinal, i.e. axial, direction, the safety filter element 22 has axial end sections 28, 30. The safety filter element 22 has retaining rings 32, 34 in these axial end sections 28, 30 to fasten the filter medium 26 on the support tube 24.

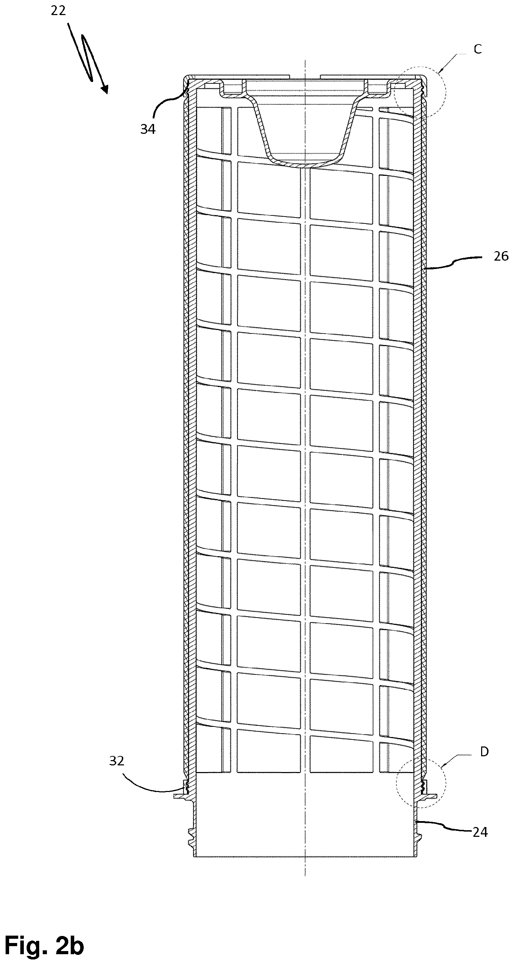

Figure 2b shows the safety filter element 22 according to figure 2a. A comparison of figure 2a with figure 2b demonstrates the method of assembling the safety filter element 22: Firstly, the support tube 24 is provided. Secondly, the filter medium 26 is put on the support tube 24. Thirdly, the retaining rings 32, 34 are fastened in order to attach the filter medium 26 on the support tube 24.

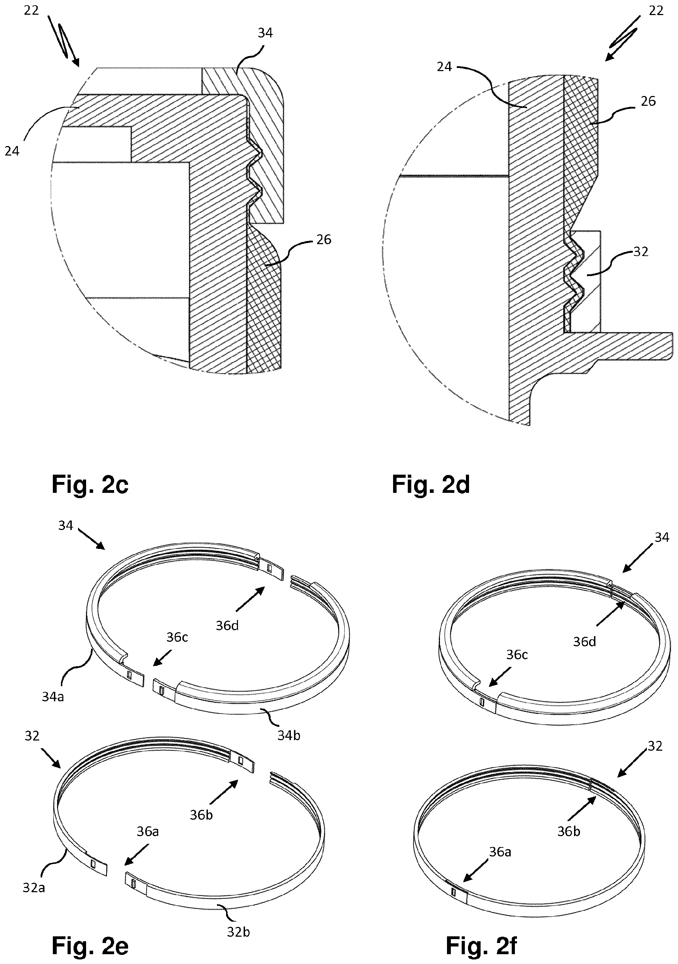

Figure 2c shows the safety filter element 22 according to detail C of figure 2b. As can be seen in figure 2c, the retaining ring 34 presses the filter medium 26 radially against the support tube 24. Furthermore, the retaining ring 34 is in axial contact with the support tube 24.

Figure 2d shows the safety filter element 22 according to detail D of figure 2b. The retaining ring 32 presses the filter medium 26 radially against the support tube 24. Furthermore, the retaining ring 32 is in axial contact with the support tube 24. The axial contact of the retaining ring 32 and the retaining ring 34 (see figure 2c) ensures the correct position of the retaining rings 32, 34 with respect to the support tube 24.

Figure 2e shows the retaining rings 32, 34 in a demounted condition. As can be seen from figure 2e, the retaining rings 32, 34 consist of retaining ring parts 32a, 32b, 34a, 34b, which are connectable via snap connections 36a, 36b, 36c, 36d.

Figure 2f shows the retaining rings 32, 34 in a mounted condition. The snap connections 36a-36d can be mounted and demounted several times in a non-destructive manner. In particular, the snap connections 36a-36d can be mounted and demounted without tools.

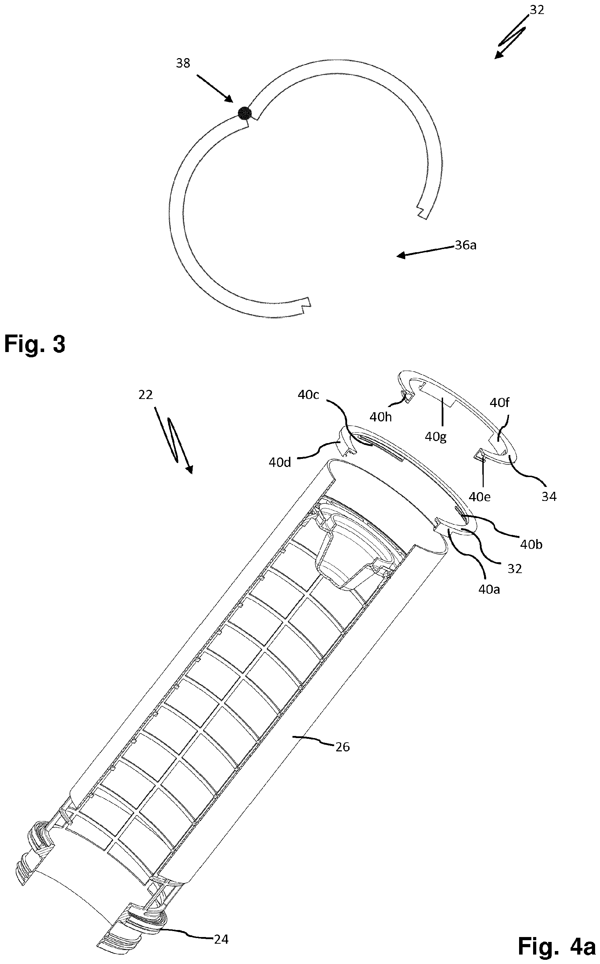

Figure 3 shows in a schematic way an alternative embodiment of a retaining ring 32. Retaining rings 32 of the type shown in figure 3 can be used both at the first axial end section 28 (see figure 2a) and the second axial end section 30 (see figure 2a). The retaining ring 32 consists of retaining ring parts 32a, 32b, which are - at one end - connected by a hinge 38. At the other end, the retaining ring parts 32a, 32b are connectable via a snap connection 36a.

Figure 4a shows a safety filter element 22 with a support tube 24, a filter medium 26 and retaining rings 32, 34. At least one of the retaining rings 32, 34, preferably both retaining rings 32, 34 are provided with at least one hook 40a, 40b, 40c, 40d, 40e, 40f, 40g, 40h in order to mount the retaining ring(s) 32, 34. The safety filter element 22 is mounted by firstly providing the support tube 24, secondly pulling the filter medium 26 on the support tube 24, thirdly pulling the retaining ring 32 over the filter medium 26 and fourthly securing the retaining ring 32 and the retaining ring 34.

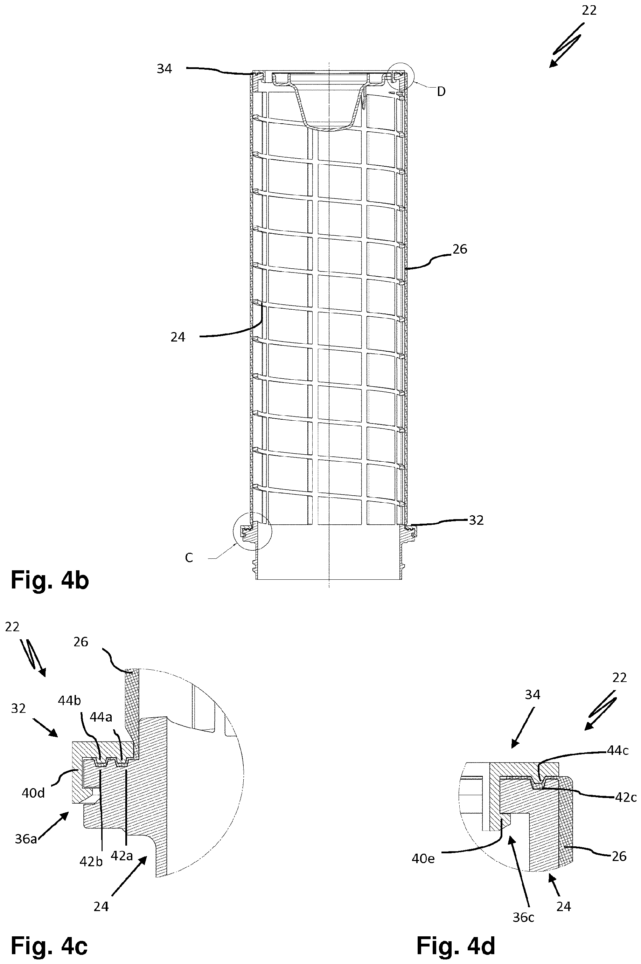

Figure 4b shows the safety filter element 22 in the completely assembled condition. The filter medium 26 is held by the retaining rings 32, 34 in a stretched manner on the support tube 24.

Figure 4c shows the safety filter element 22 according to detail C of figure 4b. As can be seen in figure 4c, the hook 40d of the retaining ring 32 enables a snap connection 36a. The support tube 24 comprises grooves 42a, 42b for the indirect or direct reception of keys 44a, 44b of the retaining ring 32. Grooves 42a, 42b and keys 44a, 44b are built to fix the filter medium 26. The filter medium 26 is folded in the vicinity of the retaining ring 32.

Figure 4d shows the safety filter element 22 according to detail D of figure 4b. As can be seen in figure 4d, the hook 40e of the retaining ring 34 enables a snap connection 36c. The support tube 24 comprises a groove 44c for the indirect or direct reception of a key 44c of the retaining ring 34. Groove 42c and key 44c are built to fix the filter medium 26. The filter medium 26 is folded in the vicinity of the retaining ring 34.

In conclusion, the invention relates to a filter element 22 for an air filter 10. The filter element 22 has a support tube 24 to which a filter medium 26 is fixed by at least one retaining ring 32, 34, preferably two retaining rings 32, 34 at the axial end sections 28, 30 of the filter element 22. The filter element 22 can be built as a safety filter element for the air filter 10. The at least one retaining ring 32, 34, preferably both retaining rings 32, 34, is/are fixed directly or indirectly to the support tube 24 in order to attach the filter medium 26 to the support tube 24. The filter medium 26 is preferably attached in a radial direction to the support tube 24 by the retaining ring(s) 32, 34. Alternatively or in addition thereto, the filter medium 26 may be attached in an axial direction on the support tube 24 by the retaining ring(s) 32, 34. The filter element 22 may comprise at least one combination of a groove 42a-42c and a corresponding key 44a-44c for grabbing the filter medium 26. The retaining ring(s) 32, 34 may be built in a single-piece or in several retaining ring parts 32a, 32b, 34a, 34b. If built in several retaining ring parts 32a, 32b, 34a, 34b, the retaining ring(s) 32, 34 can preferably be closed by a snap connection 36a-36d.

## Claims

1. Filter element (22) for an air filter (10), wherein the filter element (22) comprises:
a. A support tube (24);
b. a filter medium (26) that radially covers the support tube (24) at least partially;
c. a first retaining ring (32, 34) that presses the filter medium (26) on the support tube (24) in a first axial end section (28, 30) of the filter element (22);
wherein the first retaining ring (32, 34) is installed via a snap connection (36a-36d).

2. The filter element according to claim 1, wherein the filter element (22) comprises a second retaining ring (32, 34) that presses the filter medium (26) on the support tube (24) in a second axial end section (28, 30) of the filter element (22), which second axial end section (28, 30) of the filter element (22) is opposite the first axial end section (28, 30) of the filter element (22), wherein the second retaining ring (32, 34) is installed via a snap connection (36a-36d).

3. The filter element according to claim 1 or 2, wherein the first retaining ring (32, 34) axially and/or radially presses the filter medium (26) on the support tube (24).

4. The filter element according to one of the claims 1 to 3, wherein the filter element (22) has a groove (42a-42c) and a corresponding key (44a-44c), wherein the filter medium (26) is held between groove (42a-42c) and key (44a-44c) in order to fix the filter medium (26) to the support tube (24) with respect to axial tension on the filter medium (26).

5. The filter element according to one of the claims 1 to 4, wherein the filter medium (26) is folded in the first axial end section (28, 30) of the filter element (22).

6. The filter element according to one of the claims 1 to 5, wherein the first retaining ring (32, 34) is built of at least two retaining ring parts (32a, 32b, 34a, 34b), which have a snap connection (36a-36d) for joining respective ends of at least two retaining ring parts (32a, 32b, 34a, 34b).

7. The filter element according to one of the claims 1 to 6, wherein the first retaining ring (32, 34) is built to be mounted and demounted in a non-destructive manner.

8. Air filter (10), wherein the air filter (10) comprises a filter element (22) according to one of the claims 1 to 7 and a filter housing (12) for an at least partial reception of the filter element (22).

9. The air filter according to claim 8, wherein the air filter (10) comprises a main filter element (20) and the filter element (22) according to one of claims 1 to 7 is built in form of a safety filter element.

10. Method for assembling the filter element (22) according to one of the claims 1 to 6, wherein the method comprises the steps of:
A) Providing the support tube (24);
B) covering the support tube (24) radially at least partially with the filter medium (26);
C) securing the filter medium (26) by snap fitting the first retaining ring (32, 34).
